**Europäisches Patentamt**

**European Patent Office**

**Office européen des brevets**

(19)

(11) Veröffentlichungsnummer: **0 135 111**
**B1**

(12) **EUROPÄISCHE PATENTSCHRIFT**

(45) Veröffentlichungstag der Patentschrift:
**31.05.89**

(51) Int. Cl.⁴: **C 08 G 18/76,** C 08 G 18/10

(21) Anmeldenummer: **84109395.8**

(22) Anmeldetag: **08.08.84**

(54) **Thermoplastische Polyurethane hoher Wärmestandfestigkeit auf Basis von Naphthylendiisocyanat, Verfahren zu ihrer Herstellung und ihre Verwendung.**

(30) Priorität: **18.08.83 DE 3329775**

(43) Veröffentlichungstag der Anmeldung:
**27.03.85 Patentblatt 85/13**

(45) Bekanntmachung des Hinweises auf die Patenterteilung:
**31.05.89 Patentblatt 89/22**

(84) Benannte Vertragsstaaten:
**BE DE FR GB IT NL**

(56) Entgegenhaltungen:
**EP-A-0 004 937**
**DE-A-2 940 856**
**FR-A-1 290 662**
**FR-A-2 242 415**
**US-A-4 311 765**

**Die Akte enthält technische Angaben, die nach
dem Eingang der Anmeldung eingereicht wurden
und die nicht in dieser Patentschrift enthalten sind.**

(73) Patentinhaber: **BAYER AG, D-5090 Leverkusen 1
Bayerwerk (DE)**

(72) Erfinder: **Goyert, Wilhelm, Dr., Haberstrasse 48,
D-5090 Leverkusen 1 (DE)**
Erfinder: **Winkler, Jürgen, Gerhart- Hauptmann
Strasse 14- 16, D-5090 Leverkusen 3 (DE)**

**EP 0 135 111 B1**

**Beschreibung**

Gegenstand der Erfindung ist ein Verfahren zur Herstellung neuartiger thermoplastisch verarbeitbarer verzweigt aufgebauter Polyurethane auf Basis von Naphthylen-1.5-diisocyanat und ein Verfahren zur Herstellung von Formkörpern unter Verwendung der erfindungsgemäß erhaltenen Polyurethane.

Nach diesem Verfahren lassen sich mittelharte, thermoplastische Polyurethanelastomere mit einem guten Wärmeformverhalten, guter Rückprallelastizität (auch bei höherer Temperatur), einer akzeptablen Kälteflexibilität und einer hervorragenden Verschleißfestigkeit herstellen, welche zur Herstellung von Hydraulikdichtungen, Dichtungen, Rollen, Puffern, Schläuchen, Faltenbälgen, Steckern, Walzen, Kupplungen und ähnlichen Formkörpern Einsatz finden können.

Thermoplastische Polyurethanelastomere werden meist auf Basis des 4,4-Diisocyanatodiphenylmethans (MDI) hergestellt. Diese Elastomeren haben bei erhöhten Temperaturen (etwa 80 bis 100°C) kein gutes Rückstellvermögen. Elastomere mit in diesem Temperaturbereich hohen Rückstellvermögen und guten dynamischen Eigenschaften lassen sich auf Basis von Naphthylen-1,5-diisocyanat als Gießelastomere herstellen, doch lassen sich solche Elastomeren im allgemeinen nicht oder Elastomere nur schwer (wenn die Elastomere sehr weich eingestellt werden) thermoplastisch verformen. Daher wird im Markt bisher noch kein thermoplastisches Polyurethan auf Naphthylen-1,5-diisocyanat-Basis angeboten. Eine thermoplastische Verformbarkeit der Polyurethanelastomeren ist jedoch für sehr viele Anwendungszwecke gegenüber dem (Reaktions-)Gießverfahren bevorzugt.

In der DE-A-2 248 382 wird ein thermoplastisches Polyurethanelastomer auf Diphenylmethandiisocyanatbasis beschrieben, bei dem in einer ersten Reaktionsstufe ein OH-Prepolymer durch Umsetzung höhermolekularer Polyhydroxylverbindungen mit Toluylendiisocyanat oder Hexamethylendiisocyanat gebildet wird. Dieses OH-Prepolymer wird dann mit überschüssigen Mengen an 4,4'-Diisocyanatodiphenylmethan und Glykolen mit einem Molekulargewicht unter 500 zum thermoplastischen Polyurethan umgesetzt. In der DE-A-3 028 501 (EP-A-44 969) werden thermoplastisch verarbeitbare Polyurethanelastomere beschrieben, welche durch Umsetzung von bestimmten höhermolekularen Mischpolyester-diolen auf Basis Bernstein-/Glutar-/ und Adipinsäure, organischen Diisocyanaten und difunktionellen Kettenverlängerungsmitteln unter Mitverwendung von tri- bis hexafunktionellen Vernetzungsmitteln aufgebaut werden. Diese teilweise verzweigt aufgebauten Polyurethanelastomeren sind jedoch nicht unter Mitverwendung des Naphthylendiisocyanates hergestellt und zeigen daher auch nicht die hochwertigen elastischen Eigenschaften bei erhöhten Temperaturen.

Aus der DE-A-2 940 856 ist bekannt, gegebenenfalls zellhaltige Polyurethanelastomere durch Umsetzung eines Prepolymeren mit einem Kettenverlängerer und/oder Vernetzer herzustellen. Thermoplastische Polyurethane werden hierbei nur allgemein bei der Abhandlung des Standes der Technik erwähnt. Die FR-A-1 290 662 bezieht sich auf ein Mehrstufenverfahren zur Herstellung vernetzter Elastomerer, ohne auf thermoplastische Polyurethane Bezug zu nehmen.

Der Erfindung lag die Aufgabe zugrunde, brauchbare thermoplastische Polyurethane auf Basis Naphthylen-1,5-diisocyanat herzustellen mit ausgezeichneten Anfangs- und Endfestigkeiten.

Gegenstand der Erfindung ist ein Verfahren zur Herstellung thermoplastisch verarbeitbarer Polyurethanelastomerer auf Basis von Naphthylen-1,5-diisocyanat mit hoher Rückverformung und hohen elastischen Werten auch bei hohen Temperaturen, durch mehrstufige Umsetzung von im wesentlichen linearen, höhermolekularen Polyhydroxylverbindungen mit Molekulargewichten zwischen 550 und 10.000, unterschüssigen Mengen an Diisocyanaten und weitere Umsetzung mit andersartig aufgebauten Diisocyanaten und niedermolekularen Di- und Tri- und/oder Polyolen, gegebenenfalls unter Mitverwendung üblicher Antioxidantien, UV-Absorber, Lichtschutzmittel, Hydrolysenschutzmittel, Trennwachse, üblicher sonstiger Stabilisatoren, Hilfsmittel, Füll- und Farbstoffe, indem man

A) die höhermolekularen, im wesentlichen linearen Polyhydroxylverbindungen mit einem von Naphthylen-1,5-diisocyanat verschiedenen Diisocyanat zu einem OH-Prepolymer, bevorzugt in einem OH/NCO-Äquivalentverhältnis von 4 : 1 bis 1,33 : 1, vorverlängert,

B) das in Stufe A) hergestellte OH-Prepolymer mit Naphthylen-1,5-diisocyanat zu einem NCO-Prepolymer umsetzt und anschließend mit

C) einem Hydroxylgruppen enthaltenden Kettenverlängerer C) mit einem Molekulargewicht von 62 bis 500 zum Polyurethan umsetzt, dadurch gekennzeichnet, daß im Kettenverlängerer C)

a) 70 bis 92 Äquivalent-% der OH-Gruppen aus Diolen stammen und diese Diole Hydrochinon-di(β)-hydroxyethylether, Butandiol-1,4 oder Hexandiol-1,6 als Hauptkomponente enthalten,

b) bei Verwendung von Butandiol-1,4 oder Hexan-diol-1,6 als Hauptkomponente nur Diolgemische verwendet werden, welche 15 bis 50 Äquivalent-%, bezogen auf Diol-OH-Äquivalent-%, wenigstens eines von der Hauptkomponente unterschiedenen Dioles mit einem Molekulargewicht von 62 bis 254 enthalten und

c) 30 bis 8 Äquivalent-% der OH-Gruppen aus tri- und/oder höherfunktionellen Polyolen stammen.

Bevorzugte Isocyanate für Stufe A) sind Diphenylmethandiisocyanate, Toluylendiisocyanate, Dicyclohexylmethandiisocyanate, Hexandiisocyanate und insbesondere Di-phenylmethan-4,4'-diisocyanat.

Vorzugsweise liegt das OH/NCO-Äquivalentverhältnis in Stufe A) bei 3 : 1 bis 1,5 : 1 und insbesondere bevorzugt 2,5 : 1 bis 1,75 : 1.

Das bevorzugte Molekulargewicht des Kettenverlängerers C) beträgt 62 bis 254. Im Kettenverlängerer C) stammen bevorzugt 75 bis 90 Äquivalent-% der OH-Gruppen aus Diolen. Bevorzugte von der Hauptkomponente unterschiedliche Diole des Kettenverlängerers C) sind Hexandiol-1,6, Butandiol-1,4, Ethylenglykol oder Diethylenglykol. In einer weiteren bevorzugten Ausführungsform entstammen 25 bis 10 Äquivalent-% der OH-Gruppen aus tri- und/oder höherfunktionellen Polyolen, besonders bevorzugt Trimethylolpropan.

In einer weiteren besonders bevorzugten Ausführungsform besteht der Kettenverlängerer C) aus einem Gemisch bei 75 bis 90 Äquivalent-% OH Hydrochinon-di-(β-hydroxyethyl)-ether und 25 bis 10 Äquivalent-% OH Triol. In einer besonders bevorzugten Ausführungsform wird als Triol Trimethylolpropan eingesetzt.

Gegenstand der Erfindung sind weiterhin die nach dem obigen Verfahren erhältlichen, thermoplastisch verarbeitbare Elastomere, sowie ihre Verwendung zur Herstellung von Formkörpern, wie Hydraulikdichtungen, Dichtungen, Rollen, Puffern, Schläuchen, Faltenbälgen, Steckern, Walzen, Kupplungen und ähnlichen Formkörpern, durch thermoplastische Verformung.

Es hat sich gezeigt, daß nur durch die ausgewählte Kombination von Vorverlängerung eines höhermolekularen Polyols mit einem von Naphthylendiisocyanat verschiedenen Diisocyanat in einer ersten Stufe zum OH-Prepolymer, die Verwendung von Naphthylendiisocyanat in der zweiten Stufe zur Herstellung eines NCO-Präpolymers und die Verwendung einer bestimmten Kettenverlängerermischung aus Di- und Polyolen im angegebenen Verhältnis sich hinreichend breit und gut verarbeitbare, thermoplastische Polyurethanelastomere aufbauen lassen, welche dem geforderten Eigenschaftsbild der Kombination aus Verarbeitbarkeit und guten elastischen Werten auch bei hohen Temperaturen bei gleichzeitig exzellenten Abriebwerten und Weiterreißfestigkeiten entsprechen.

Als höhermolekulare, im wesentlichen lineare Polyole mit Molekulargewichten zwischen 550 und 10 000, bevorzugt 800 und 6000, kommen erfindungsgemäß praktisch alle an sich bekannten, vorzugsweise bifunktionellen, gegebenenfalls in untergeordneten Mengen vorzugsweise bis 10 %, auch trifunktionellen Polyester, Polylactone, Polyether, Polythioether, Polyesteramide, Polycarbonate, Polyacetale, Vinylpolymere wie z. B. Polybutadiendiole oder auch bereits Urethan- oder Harnstoffgruppen enthaltende Polyhydroxylverbindungen, gegebenenfalls modifizierte natürliche Polyole, sowie auch andere Zerewitinoffaktive Gruppen, welche mit Isocyanaten zu reagieren vermögen, z. B. Amino-, Carboxyl- oder Thiolgruppen enthaltende Verbindungen in Betracht. Diese Verbindungen entsprechen dem Stand der Technik und werden z. B. in DE-A-2 302 564, 2 423 764, 2 549 372, 2 402 840 und 2 920 501 sowie der DE-B-2 457 387 eingehend beschrieben.

Erfindungsgemäß bevorzugt sind im wesentlichen bifunktionelle Hydroxylgruppen-haltige Polyester aus Diolen und Adipinsäure, Hydroxylpolycarbonate, Hydroxylcaprolactone, Hydroxyl-polytetrahydrofurane oder Hydroxypolyether auf Polyethylenoxid- und/oder Polypropylenoxidbasis und entsprechende Mischether aus derartigen Komponenten. Besonders bevorzugt sind Polyester aus Diolen und Adipinsäure und Polycaprolactonesterdiole, insbesondere Hexandiol-1.6/Butandiol-1.4-Adipate sowie Gemische aus Hexandiol-1.6-polycarbonat und Butandiol-1.4-adipat, sowie Adipinsäure enthaltende Hexandiolpolycarbonate oder Polycarbonate auf Basis von Umsetzungsprodukten des Hexandiols-1,6 mit ε-Caprolacton.

Die genannten höhermolekularen, im wesentlichen bifunktionellen Polyhydroxyverbindungen vom Molekulargewicht 550 bis 10 000 werden mit gegenüber den OH-Gruppen unterschüssigen Mengen an von Naphthylen-1.5-diisocyanat unterschiedlichen Diisocyanaten, z. B. aromatischen, cycloaliphatischen oder aliphatischen Diisocyanaten wie Phenylen-1.4-diisocyanat, Toluylen-2.4- und/oder -2.6-diisocyanat, Diphenyl-4,4'-diisocyanat, Diphenylether-4,4'-diisocyanat, den Diphenylmethan-4,4'- und/oder 2,4'- und/oder 2,2'-diisocyanaten oder ihren Halogen- oder Mono-bis-tetraalkyl-$C_1$-$C_8$-alkyl-derivaten, z. B. 3,3'-Dimethyl-4,4'-diisocyanato-diphenylmethan oder 3,5-Diethyl-3',5'-diisopropyl-diphenylmethan-4,4'-diisocyanat, Dicyclohexyl-4,4'-diisocyanat oder den stereoisomeren Dicyclohexylmethan-4,4'-diisocyanaten oder Hexamethylendiisocyanat, Lysinesterdiisocyanat oder Hexamethylendiisocyanat umgesetzt. Bevorzugt verwendet werden die Diphenylmethan-4,4'- und/oder 2,4'- und/oder 2,2'-diisocyanate, die Toluylen-2,4- und/oder 2,8-diisocyanate, das Isophorondiisocyanat, Dicyclohexylmethan-4,4'-diisocyanat und das Hexan-1.6-diisocyanat. Ganz besonders bevorzugt ist das Diphenylmethan-4,4'-diisocyanat.

Die höhermolekularen Dihydroxyverbindungen und diese Diisocyanate werden in OH/NCO-Verhältnissen von > 1 z. B. 4 : 1, bis 1,33 : 1, vorzugsweise von 3 : 1, bis 2,5 : 1, besonders bevorzugt 2,5 : 1 bis 1,5 : 1, in üblicher Weise zum OH-Prepolymeren umgesetzt. Diese Umsetzung kann dabei in einer selbständigen, vorgeschalteten Stufe erfolgen, sie kann jedoch auch auf einer mehrstufigen Reaktionsschnecke in den ersten Teilen des Reaktionsraumes erfolgen, bevor die weitere Reaktion mit dem Naphthylen-1,5-diisocyanat und dem Kettenverlängerergemisch erfolgt.

Das Naphthylen-1,5-diisocyanat wird in (gegenüber dem OH-Prepolymer) überschüssigen Mengen dem OH-Prepolymer zugesetzt, wobei sich nunmehr ein NCO-Prepolymer bildet, das weiter mit dem Kettenverlängerergemisch C) zum Polyurethanelastomer umgesetzt wird. Das Naphthyen-1,5-diisocyanat wird dabei mit dem OH-Prepolymeren vorzugsweise in solchen Mengen umgesetzt, daß sich NCO-Prepolymere mit NCO-Gehalten zwischen 4 und 12 Gew.-% NCO, vorzugsweise 5 - 10 % NCO ausbilden.

Die Kettenverlängerungsmittelgemische C) bestehen aus einem Diol bzw. Diolgemischen und Triolen- und/oder höherfunktionellen Polyolen bzw. ihren Gemischen in bestimmten Mengenverhältnissen. Die erfindungsgemäßen thermoplastisch verarbeitbaren Polyurethane mit Shore-Härten zwischen 80 Shore-A und 99 Shore-A (70 Shore-D), insbesondere mittelharte Typen im Bereich von 90 Shore-A bis 96 Shore-A (55 Shore-D) lassen sich nur durch die beanspruchte Kombination von Diolen und Triolen (bzw. Polyolen) in bestimmten Mengenverhältnissen herstellen.

Verwendet man als Kettenverlängerer den Hydrochinon-di-(β)-hydroxyethylether, so kann diese Verbindung als alleiniges Diol eingesetzt werden, wobei jedoch die angegebenen Mengen an kurzkettigem Triol (und/oder Polyol), vorzugsweise Trimethylolpropan, dem Kettenverlängerer zugegeben werden müssen.

Verwendet man jedoch Butandiol-1.4 oder Hexandiol-1.6 als Kettenverlängerer-Diol, so kann man dieses nur in Kombination mit einem oder mehreren anderen Kettenverlängerer-Diol(en), sogenannten Co-Diol(en) verwenden, z. B. Butandiol-1.4 zusammen mit Hexandiol-1.6 und/oder Diethylenglykol und/oder Neopentylglykol und/oder Ethandiol. Nur mit solchen Diolgemischen kommt man bei Butan- und Hexandiol in Kombination mit den erfindungsgemäß gekennzeichneten Mengen an Triolen (und/oder Polyolen), vorzugsweise Trimethylolpropan, zum Aufbau von thermoplastisch verarbeitbaren, (mittelharten) Polyurethanelastomeren.

Im Falle des Hydrochinon-di-(β-hydroxy-ethylethers) ist der Einsatz eines zweiten Kettenverlängererdiols wie Butandiol-1.4 oder Hexandiol-1.6 nicht notwendig - aber auch nicht schädlich. Bevorzugt werden bei Hydrochinon-di-(β-hydroxyethylether) Einstellungen ohne Cokettenverlängererdiol(e).

In dem Diol/Polyol-Kettenverlängerungsmittelgemisch C) stammen erfindungsgemäß 70 bis 92 Äquivalentprozent, bevorzugt 75 - 90 Äquivalent-% der OH-Gruppen aus Diolen und 30 bis 8 Äquivalentprozent der OH-Gruppen aus tri- und/oder höherfunktionellen Polyolen.

Wie bereits ausgeführt, kann erfindungsgemäß bei den Diolen der Hydrochinon-di-(β-hydroxyethylether) als alleiniges Diol verwendet werden, während bei Verwendung von z. B. Butandiol-1.4 oder Hexandiol-1.6 als Hauptkomponente Diolgemische eingesetzt werden müssen. Diese Diolgemische bestehen aus mindestens der Hälfte der Äquivalentprozent OH aus Butandiol-1.4 oder Hexandiol-1.6 neben mindestens 15 Äquivalentprozent OH bis maximal der Hälfte der Äquivalent-% OH aus jeweils anderen Diolen des Molekulargewichtsbereichs 62 bis 500, vorzugsweise 62 bis 254, vorzugsweise geradkettigen oder verzweigtkettigen, gegebenenfalls ether- und/oder estergruppenhaltigen Alkylendiolen, besonders bevorzugt Hexandiol-1.6, Butandiol-1.4, Ethylenglykol, Diethylenglykol und/oder Neopentylglykol, aber gegebenenfalls auch Cycloalkylendiolen wie Chinit oder aus Resorcin-bis-hydroxyethylether oder Terephthalsäure-bis-hydroxyethylester. Die Mengen an Butandiol-1,4 oder Hexandiol-1,6 sowie der daneben eingesetzten Co-Diole ergänzen sich jeweils auf den genannten Gesamtgehalt von 70 bis 92 Äquivalent-% OH aus Diolen.

Die tri- und/oder höherfunktionellen Polyole im Kettenverlängerergemisch C) stellen vorzugsweise Triole dar, z. B. Trimethylolethan, Trimethylolpropan, Hexantriole, Glycerin oder Trihydroxycyclohexane. Ganz besonders bevorzugt als Triol ist jedoch Trimethylolpropan. Neben den Triolen oder anstelle der Triole können auch höherfunktionelle Polyole, z. B. Tetrole, Pentole oder Hexole oder ihre Gemische (z. B. die Formitgemische) wie sie durch Aldol-Reaktion von Formaldehyd und nachschließende Reduktion entstehen oder Gemische von propoxyliertem Rohrzucker mit Diolen oder Triolen, z. B. mit einer Funktionalität zwischen 5 und 6, verwendet werden. Im Falle solcher höherfunktioneller Polyole werden im allgemeinen Mengen unter 15 Äquivalentprozent der OH-Gruppen im Kettenverlängerergemisch eingesetzt.

Den Polyurethankomponenten können selbstverständlich die üblichen Hydrolyseschutzmittel und UV-Stabilisatoren entsprechend dem Stand der Technik zugesetzt werden. In vielen Fällen empfiehlt es sich, zur Stabilisierung des Polyurethans Antioxidantien wie 2,6-Di-tert-butyl-4-methylphenol, andere sterisch gehinderte Phenole und/oder organische Phosphite und/oder Phosphonite und/oder andere übliche Antioxidantien einzeln oder in Mischung in einer Menge von etwa 0,1 bis 1,5 Gew.-%, bezogen auf thermoplastisches Polyurethanelastomer, zuzugeben. Auch UV-Absorber und Lichtschutzmittel auf Benztriazol-, Cyanacrylsäureester-, 2,2,6,6-Tetraalkyl-piperidin-, 1,2,2,6,6-Pentaalkyl-piperidin- oder auch auf Benzophenon-Basis, sowie andere UV-Absorbertypen, können einzeln oder in Mischung dem thermoplastischen Polyurethan beigegeben werden. Die Hydrolyseschutzmittel basieren üblicherweise auf Carbodiimid-, Harnstoff-, Cyanat- oder Oxazolidin-Basis. Den Mischungen können kleine Mengen eines Copolymerisats oder Pfropfpolymerisats entsprechend EP-B-12 343 und/oder Prozeßhilfsmittel auf Basis von Acrylpolymeren, vorzugsweise Homo- oder Copolymeren von Methyl- und Butylmethacrylat und andere Verbindungen entsprechend US-A-4 179 479 zugesetzt werden. Als Trennmittel werden beispielsweise Wachse und Öle eingesetzt, ferner langkettige Verbindungen mit Carboxyl-, Ester-, Amid-, Urethan- und Harnstoffgruppen entsprechend der DE-A-2 204 470. Auch unpolare, z. B. polyethylenische Wachse lassen sich in höherer Dosierung verwenden.

Katalysatoren für die Reaktion zwischen Hydroxyl- und Isocyanatgruppen können gegebenenfalls mit verwendet werden, vorzugsweise solche der in der Polyurethanchemie an sich bekannten Art, z. B. tertiäre Amine wie Triethylamin, Tetramethylethylendiamin, 1,4-Diaza-bicyclo-(2,2,2)-octan, N,N-Dimethyl-benzylamin, N-Methyl-N'-dimethylaminoethyl-piperazin, Pentamethyl-diethylentriamin, oder auch als Katalysatoren bekannte Mannichbasen aus sekundären Aminen wie Dimethylamin und Aldehyden (Formaldehyd) oder Ketonen (Aceton) und Phenolen, ferner Silaamide mit Kohlenstoff-Silicium-Bindungen, z. B. 2,2,4-Trimethyl-2-silamorpholin und 1,3-Diethylaminomethyl-tetramethyl-disiloxan, Erfindungsgemäß können auch organische Metallverbindungen, insbesondere organische Zinnverbindungen als Katalysatoren verwendet werden, z. B. Zinn-(II)-acetat, Zinn-(II)-ethylhexoat und die Zinn-(IV)-Verbindungen, z. B. Dibutylzinndichlorid, Dibutylzinndilaurat, Dibutylzinnmaleat. Weitere geeignete Katalysatoren sind beispielsweise in der DE-A-2 920 501 beschrieben. Außerdem können Antistatika, Flammschutzmittel (siehe z. B. DE-A-3 113 385), fungistatisch und bakteriostatisch wirkende Substanzen, sowie Füllstoffe wie Bariumsulfat, Kreide, Kieselgur, Diatomeenerden, Ruß und Farbstoffe oder Glasfasern zugegeben werden. Auch Silikonöle oder Dimethylpolysiloxan/Polyoxyalkylen-Verbindungen (Polyethersiloxane) sind vorteilhaft als Zusatzstoffe einsetzbar.

Die Mengen an Reaktionskomponenten werden im erfindungsgemäßen Verfahren in der Regel so gewählt, daß das NCO/OH-Verhältnis von 1,5-Naphthylen-diisocyanat und dem zur Bildung des OH-Prepolymeren verwendeten Diisocyanats zu den höhermolekularen, im wesentlichen bifunktionellen Polyhydroxylverbindungen und den Kettenverlängerermittelgemischen C), abhängig vom jeweils angewendeten Verarbeitungsverfahren, zwischen 0,95 und 1,15, vorzugsweise zwischen 1,0 und 1,1 liegt.

Die erfindungsgemäßen thermoplastischen Polyurethane können auf mehrwelligen Reaktionsschnecken in einem kontinuierlich geführten Mehrstufenverfahren durch Eindosierung an verschiedenen Stellen der Reaktionsschnecke, wobei das OH-Prepolymer in den Anfangszonen der Reaktionsschnecke gebildet wird, entsprechend DE-A-2 302 564 oder auch bevorzugt in Gießverfahren, wie nachfolgend beschrieben, hergestellt werden. Es kann auch in mehrstufiger Form das OH-Prepolymer diskontinuierlich aufgebaut und in die Reaktionsschnecke kontinuierlich eindosiert werden, oder kontinuierlich in einem Rührkopf mit den übrigen Komponenten B) und C) vermischt und dann kontinuierlich oder diskontinuierlich auf ein Band aufgetragen werden. Statt in einem Rührkopf können die genannten Produkte auch in einem Topf gemischt und dann auf ein teflonbeschichtetes Band oder auf z. B. teflonbeschichtete Bleche ausgetragen werden. Wie auch in einem Beispiel angegeben, können die Produkte auch nach einem Zweistufenverfahren wie folgt hergestellt werden: das höhermolekulare Polyol wird mit z. B. Diphenylmethan-4,4'-diisocyanat zum OH-Prepolymeren vorverlängert. Ein kleinerer Teil, (z. B. 1/4) dieses OH-Prepolymers wird mit der Gesamtmenge des Naphthylen-1,5-diisocyanats zu einem NCO-Prepolymeren umgesetzt und in eine Zweiwellenschneckenknetmaschine eindosiert, wobei an gleicher oder anders lokalisierter Eintragsstelle auch der größere Teil des OH-Prepolymers und das Kettenverlängerergemisch C) eindosiert wird. Nach Durchlaufen der Schneckenmaschine wird das gebildete Elastomer kontinuierlich auf ein Band gegossen oder in Flüssigkeiten abgeschreckt.

Die Vermischung kann statt in einer Schneckenmaschine auch in einem Rührkopf erfolgen. Jedes dieser genannten Verfahren oder übliche Abwandlungen dieser Verfahren können zur erfindungsgemäßen Herstellung der Polyurethan-Elastomeren eingesetzt werden.

Ihre weitere Verarbeitung erfolgt nach der Herstellung und Granulierung auf thermoplastischem Weg, z. B. Verspritzen in Spritzgußmaschinen mit gegebenenfalls anschließender Temperung der Formkörper. Die erfindungsgemäß hergestellten thermoplastischen Polyurethane weisen ein gutes Rückstellvermögen, besonders auch bei hohen Temperaturen wie 80 bis 100°C auf. Der Druckverformungsrest bei 100°C beträgt beispielsweise ca. 40 bis 50 % (nach 24 Stunden, entsprechend DIN 53 517 bestimmt). Thermoplasten auf Basis von MDI als alleiniger Isocyanatkomponente und Butandiol-1.4 als Kettenverlängerer erreichen vergleichsweise nur Werte des Rückstellvermögens um 60 bis 70 % oder schlechter. Die erfindungsgemäßen Produkte eignen sich infolge ihres besonders guten Rückstellvermögens sehr für Dichtungen, die bei hohen Temperaturen belastet werden.

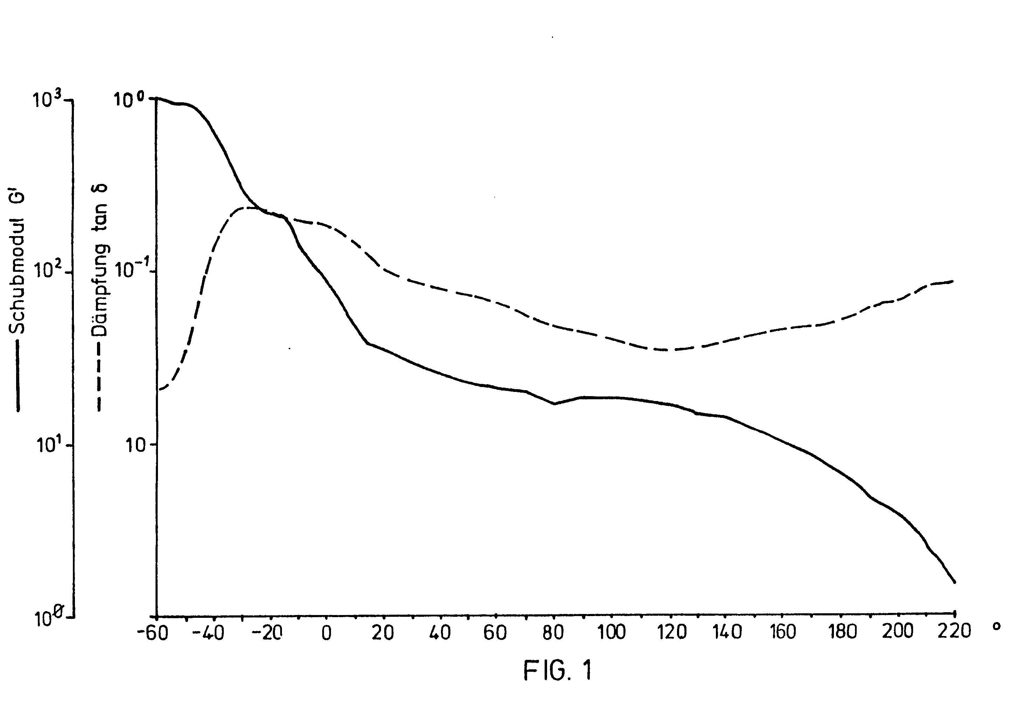

Auch der Torsionsschwingungsversuch zeigt eine hohe Wärmestandfestigkeit, die besser als die von thermoplastischen Polyurethanen auf reiner MDI-Basis (bei vergleichbarem Modul) ist (siehe Beispiele 1A, 1B und Vergleichsbeispiel 1.P, Fig. 1 - 3). Die dynamischen Eigenschaftwerte sind für Polyurethan-Thermoplaste sehr gut. Daher ist dieses Material auch für hochbelastete Rollen sehr geeignet. Diese Produkte weisen außerdem eine hohe Abriebfestigkeit und eine niedrige Quellung bei Einwirkung von Öl auf. Die Lösungsmittelbeständigkeit gegen aliphatische und aromatische Agentien ist recht gut.

Auch die Kälteflexibilität dieser Produkte ist im Vergleich zu thermoplastischen Polyurethanen auf reiner MDI-Basis verbessert. Das Dämpfungsmaximum des erfindungsgemäßen Produktes liegt bei etwa -30°, während die konventionellen Produkte ihr Maximum bei etwa 0°C haben. Es ergibt sich hieraus ein Vorteil der erfindungsgemäßen Type von $\Delta 30°C$.

In den folgenden Beispielen bedeuten Teile immer Gewichtsteile. Bei den Kettenverlängerungsmitteln (Di- und Polyolen) wird die Menge der OH-Äquivalente in den Kettenverlängerungsmitteln auch in Form von OH-Äquivalentprozenten (OH-Äq.-%) angegeben, woraus man entnehmen kann, wieviele OH-Gruppen aus Diolen und wieviele OH-Gruppen aus den höherfunktionellen Tri- und/oder Polyolen entstammen. Eine entsprechende Umrechnung ist in Beispiel la angegeben.

**Beispiele**

**I. Gießverfahren**

1A) Kettenverlängerung mit einem Alkylendiol-Gemisch plus einem Triol.
    Ansatz:

a) 63,27 Gew.-Teile Butandiol-1,4/Hexandiol-1,6-Adipinsäurepolyester, (OH-Zahl 59); Molverhältnis der Diole B/H = 70/30)

b) 3,72 Gew.-Teile 4,4'-Diisocyanatodiphenylmethan (MDI)
(OH/NCO-Verhältnis a/b = 2,24 : 1)

c) 0,51 Gew.-Teile Stearylamid
0,51 Gew.-Teile 2,2'-6,6'-Tetraisopropyldiphenylcarbodiimid

d) 23,13 Gew.-Teile Naphthylen-1,5-diisocyanat
(NCO/OH-Verhältnis d)/OH-Prepolymer = 5,97 : 1)

e) Kettenverlängerergemisch:
5,69 Gew.-Teile Butandiol-1,4, (67,7 Äquiv.-% OH)
1,90 Gew.-Teile Hexandiol-1,6, (17,3 Äquiv.-% OH)
1,26 Gew.-Teile Trimethylolpropan (15,0 Äquiv.-% OH)

Das Gesamt NCO-OH-Verhältnis ($\frac{b+d}{a+e}$ ist 1,025 : 1).

Das Kettenverlängerergemisch, wie unter e) bezeichnet, setzt sich zusammen (bei der Annahme von Gewichtsteilen = Gramm) aus 0,0632 Mol Butandiol = 0,1264 Äquivalenten an OH-Gruppen = 67,7 Äquivalentprozent OH-Gruppen und 0,0161 Mol Hexandiol-1.6, entsprechend 0,0322 Äquivalenten an OH-Gruppen = 17,3 Äquivalentprozent OH im Ansatz. Das Trimethylolpropan entspricht 0,0094 Mol = 0,028 Äquivalenten an OH-Gruppen = 15,0 Äquivalentprozent OH. Das Verhältnis der OH-Gruppen aus der Alkylendiolmischung zu OH-Gruppen aus der trifunktionellen Verbindung beträgt hier 85 zu 15 Äquivalentprozent.

Die Komponenten a) und b) werden unter Rühren 15 Minuten bei 120°C in einem Reaktionskessel zum OH-Prepolymer voraddiert. Nach der Zugabe von c) und dem Aufheizen des Gemisches a) bis c) auf 145° wird das Naphthylendiisocyanat d) unter Rühren zugegeben und ca. 10 Minuten zum NCO-Prepolymer umgesetzt. Die Endtemperatur der Prepolymermischung beträgt ca. 130°C. Unter intensivem Rühren wird das gebildete NCO-Prepolymer mit dem auf 60° vorgewärmten Kettenverlängerergemisch e) umgesetzt. Nach etwa 30 Sekunden gießt man das Reaktionsgemisch in eine 80 bis 100°C heiße Wanne mit Teflon-Unterlage und heizt etwa eine Stunde bei 100 bis 110° aus. Das erhaltene Fell wird in Streifen geschnitten und granuliert.

Das Polyurethanelastomer-Granulat weist nach zwei- bis dreitägiger Lagerung, Verspritzen des Granulats auf einer Spritzguß-Maschine bei etwa 240°C und anschließender Temperung der Formkörper (15 Stunden bei 110°C) die in der Tabelle 1) beschriebenen Eigenschaften auf.

**Tabelle 1** Eigenschaften der Formkörper aus Ansatz 1A)

| Prüfung | Prüfnorm | Wert | Maßeinheit |
|---|---|---|---|
| Modul 100 % | DIN 53 504 | 12,3 | MPa |
| Modul 300 % | DIN 53 504 | 21,1 | MPa |
| Zugfestigkeit | DIN 53 504 | 36,6 | MPa |
| Bruchdehnung | DIN 53 504 | 48,2 | % |
| Weiterreißwiderstand | DIN 53 515 | 62,5 | kN/m |
| Shore Härte A/D | DIN 53 505 | 92/38 | - |
| Elastizität | DIN 53 512 | 39 | % |
| Restdruckverformung 24 h bei 100°C | DIN 53 517 | 51,7 | % |
| Abrieb | DIN 53 516 | 28 | mm³ |

1B) Kettenverlängerung mit Hydrochinon-di-(β-hydroxyethylether) und einem trifunktionellen Triol (Trimethylolpropan)

Ansatz:

a) 66,52 Gew.-Teile Butandiol-1.4/Hexandiol-1.6-Adipinsäurepolyester (OH-Zahl 59) aus Beispiel 1A)

b) 3,92 Gew.-Teile 4,4'-Diisocyanatodiphenylmethan (MDI)
(OH/NCO-Verhältnis a/b = 2,24 : 1)

c) 0,53 Gew.-Teile Stearylamid und
0,53 Gew.-Teile 2,2'-6,6'-Tetraisopropyl-di-phenylcarbodiimid

d) 17,21 Gew.-Teile Naphthylen-1.5-diisocyanat
(NCO-OH-Verhältnis (NCO/OH-Prepolymer)=4,23 : 1,
NCO-Gehalt im "NCO-Prepolymer" = 6,0 % NCO).

e) 9,97 Gew.-Teile Hydrochinon-di-(β-hydroxyethylether) (77,2 Äquivalentprozent OH)
1,33 Gew.-Teile Trimethylolpropan (22,8 Äquivalentprozent OH)
Das Gesamt-NCO/OH-Verhältnis beträgt 1,04 : 1.

Die Verarbeitung erfolgt ähnlich wie bei dem vorhergegangenen Ansatz, aber mit der Abänderung, daß das Kettenverlängerergemisch e) auf eine Temperatur von 115°C erwärmt und mit dieser Temperatur dem NCO-Prepolymer zugegeben wird. Die Weiterverarbeitung erfolgt analog dem unter 1A) beschriebenen Verfahren. Eigenschaften siehe Tabelle 2.

**Tabelle 2** Eigenschaften der thermoplastisch verarbeiteten PU-Elastomer-Formkörper nach 1B)

| Prüfung | Norm | Wert | Maßeinheit |
|---|---|---|---|
| Modul 100 % | DIN 53 504 | 10,7 | MPa |
| Modul 300 % | DIN 53 504 | 18,1 | MPa |
| Zugfestigkeit | DIN 53 504 | 25,4 | MPa |
| Bruchdehnung | DIN 53 504 | 428 | % |
| Weiterreißwiderstand | DIN 53 515 | 63,8 | kN/m |
| Shore Härte A/D | DIN 53 505 | 90/35 | - |
| Elastizität | DIN 53 512 | 42 | % |
| Restdruckverformung 24 h bei 100°C | DIN 53 517 | 52,0 | % |
| Abrieb | DIN 53 516 | 26 | mm$^3$ |

**Beispiele 1C) bis 1K)**

Erfindungsgemäße, thermoplastische Polyurethane werden weiterhin nach den in Tabelle 3 aufgeführten Rezepturen 1C) bis 1K) hergestellt, wobei wie in Beispiel 1A) bzw. 1B) verfahren wird. Die Versuche 1C) bis 1E) stellen Variationen der Kettenverlängerermischungen e) dar. Bei den Beispielen 1F) bis 1I) wird das höhermolekulare Polyesterdiol variiert. Beim Versuch 1K) wurde das Diisocyanat für die Vorverlängerung des OH-Prepolymers verändert.

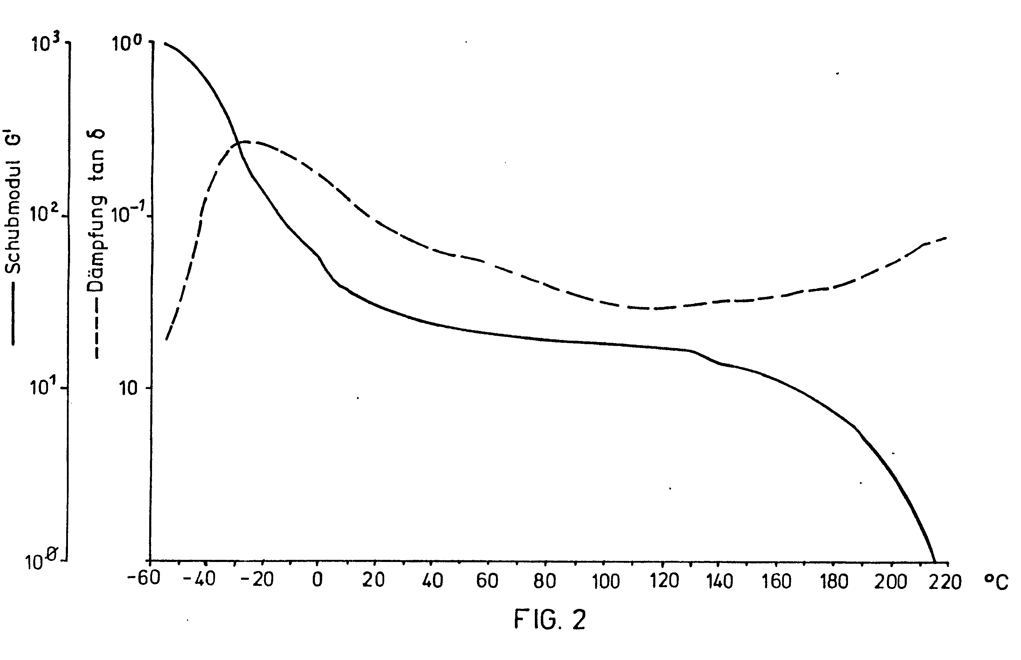

Die in den Versuchen 1A) bis 1K) beschriebenen Polyurethanelastomeren lassen sich thermoplastisch auf im Handel üblichen Spritzgußmaschinen verarbeiten. Sie haben im allgemeinen eine gute Kälteflexibilität und eine für thermoplastische Polyurethane beachtlich hohe Wärmestandfestigkeit bei gleichzeitig hoher Elastizität. Dies ist in Figur 1) und Figur 2) mit den Kurven für den Schubmodul G' und die Dämpfung tan. δ (entsprechend dem Torsionsschwingungsversuch nach DIN 53 445) in Abhängigkeit von der Temperatur für die Beispiele 1 A und 1 B beispielhaft wiedergegeben.

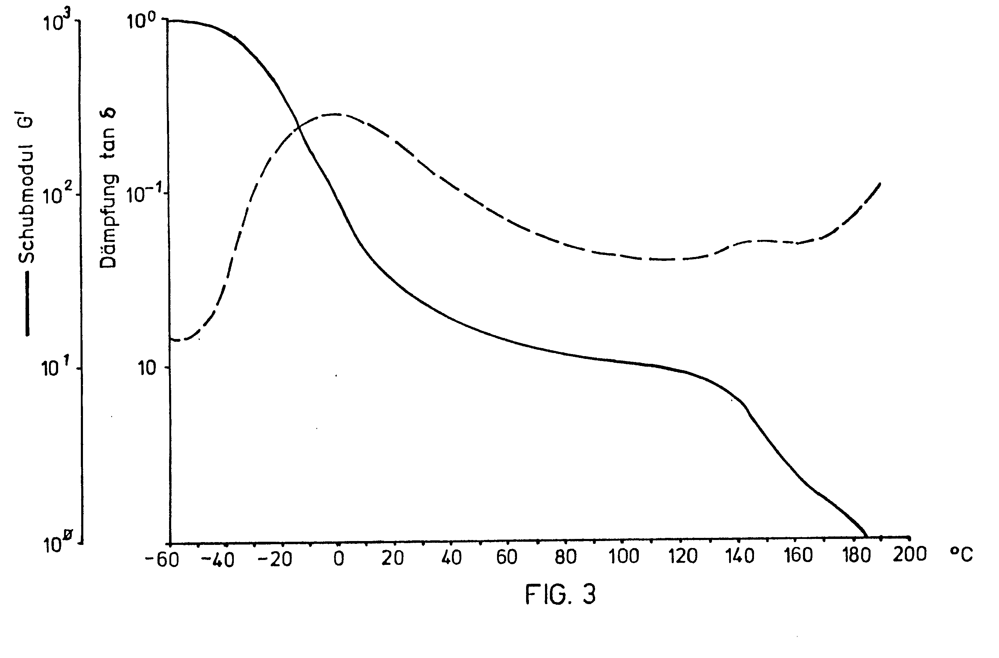

Vergleichsweise weist ein thermoplastisches Polyurethan auf 4,4'-Diisocyanato-diphenylmethan-Basis (Vergleichsbeispiel 1 P) (Figur 3) ein Dämpfungsmaximum von 0° gegenüber einem Dämpfungsmaximum bei erfindungsgemäßen Polyurethanelastomeren wie 1A) bzw. 1B) von -30°C auf.

Der Torsionsmodul bleibt beim Vergleichsversuch 1 P (Figur 3) nur bis ca. 120° waagerecht, während die erfindungsgemäßen Polyurethanelastomertypen auf Naphthylendiisocyanatbasis in ihren Torsionsmodulkurven bis zu 160°C waagerecht bleiben.

Zu den nicht erfindungsgemäßen Beispielen zählen die Ansätze 1L) bis 1.0). Auf Spritzgußmaschinen können diese nicht thermoplastisch zu einwandfreien Spritzlingen verarbeitet werden. Solche Spritzlinge weisen beispielsweise an der Oberfläche Risse auf. Man kann hier nur unter großen Schwierigkeiten (schmaler Schmelzbereich, Zersetzungserscheinung) höchstens einfache Platten (teils inhomogen) herstellen und die Versuche außerordentlich schlecht reproduzieren (s. Tabelle 4). Die Versuche 1L) und 1M) sind vergleichbar zu dem erfindungsgemäßen Ansatz 1A) hergestellt; der Vergleichsversuch 1L) ist jedoch ohne trifunktionelles Vernetzer-Polyol und der Vergleichsversuch 1M) ist mit nur einem Alkylendiol (Hexandiol-1.6) und Trimethylolpropan, aber nicht, wie erfindungsgemäß gefordert, in Mischung mit einem zweiten Diol, (z. B. Butandiol-1.4) durchgeführt.

Die Vergleichsversuche 1M) und 1O) entsprechen dem erfindungsgemäßen Ansatz 1B); der Vergleichsversuch 1N) ist aber ohne den kurzkettigen trifunktionellen Vernetzer (stattdessen mit einem verzweigten langkettigen Adipinsäureester), und der Vergleichsversuch 1.0) ist ohne OH-Prepolymerbildung mit einem Diisocyanat durchgeführt.

Die Zusammensetzung der Beispiele 1C) bis 1K) und der Vergleichsversuche 1L) bis 1 O) geht aus der Tabelle 3 hervor. Der Vergleichsversuch 1 P ist auf Diphenylmethan-4,4'-diisocyanat-Basis, entsprechend üblichen thermoplastischen Elastomeren, aufgebaut.

Im erfindungsgemäßen Versuch 1 Q wurde als Polyol im Kettenverlängerungsmittelgemisch ein Polyolgemisch der OH-Zahl 380 und der mittleren Funktionalität von 5,8 verwendet. Das Polyol wurde durch gemeinsame Propoxylierung von Rohrzucker, 1,2-Propylenglykol und Wasser bis zu der angegebenen OH-Zahl hergestellt. Die Zahl der OH-Gruppen in den Ausgangskomponenten für Propoxylierungsreaktion war wie folgt eingesetzt:

87,4 OH % aus Rohrzucker
6,4 OH % aus 1,2-Propylenglykol
und 6,2 OH % aus Wasser

das erhaltene Elastomer 1 Q konnte thermoplastisch zu einwandfreien Formkörpern verarbeitet werden.

**Tabelle 3**

| | Kompo-nente | Beispiel-Nummer (Angaben in Gew.-Teilen) | | | | |
|---|---|---|---|---|---|---|
| | | 1.C. | 1.D. | 1.E. | 1.F. (Vergleichsversuche) | 1.G. |
| Butandiol-1.4-adipat (OHZ 59) | a | | | | 59,45 | |
| Hexandiol-1.6-adipat (OHZ 55) | a | | | | | 66,06 |
| Butandiol-1.4, Hexandiol-1.6-adipat (OHZ 59) | a | 66,49 | 59,07 | 62,46 | | |
| Hexandiol-1.6-Polycarbonat (OHZ 56) | a | | | | | |
| Polyester aus Adipinsäure, Diethylenglykol und Trimethylolpropan (OHZ 62) | a | | | | | |
| 4,4'-Diisocyanatodiphenylmethan | b | 3,92 | 3,48 | 3,69 | 3,51 | 3,87 |
| 1,6-Hexamethylendiisocyanat | b | | | | | |
| Stearylamid | c | 0,53 | 0,47 | 0,50 | 0,59 | 0,98 |
| Carbodiimid (bsp. 1A) | c | 0,53 | 0,47 | 0,50 | 0,59 | 0,52 |
| 2,6-Di-t-butyl-4-methylphenol | c | 0,13 | | 0,12 | 0,12 | 0,13 |
| Naphthylen-1,5-diisocyanat | d | 20,35 | 26,40 | 24,42 | 22,00 | 17,87 |
| Ethandiol | e | - | - | 2,50(34,5) | - | - |
| Butandiol-1.4 | e | 3,32(46,1) | 1,77(21,2) | 5,62(53,5) | 5,35(67,7) | - |
| Hexandiol-1.6 | e | 3,32(35,2) | 7,09(64,6) | - | 1,78(17,2) | - |
| Hydrochinon-di-β-hydroxyethylether | e | - | - | - | - | 9,84(77,2) |
| Trimethylolpropan | e | 1,33(18,7) | 1,18(24,2) | 1,25(12,0) | 1,19(15,1) | 1,31(22,8) |
| NCO/OH | e | 1,03 | 1,00 | 1,03 | 1,05 | 1,03 |

**Tabelle 3** (Fortsetzung)

| | Kompo-nente | Beispiel-Nummer (Angaben in Gew.-Teilen) | | | | |
|---|---|---|---|---|---|---|
| | | 1.H. | 1.I. | 1.K. | 1.L. (Vergleichsversuche) | 1.M. |
| Butandiol-1.4-adipat (OHZ 59) | a | | 31,31 | | | |
| Hexandiol-1.6-adipat (OHZ 55) | a | | | 66,89 | | |
| Butandiol-1.4, Hexandiol-1.6-adipat (OHZ 59) | a | | | | 64,53 | 63,03 |
| Hexandiol-1.6-Polycarbonat (OHZ 56) | a | 58,51 | 31,31 | | | |
| Polyester aus Adipinsäure, Diethylenglykol und Trimethylolpropan (OHZ 62) | a | | | | | |
| 4,4'-Diisocyanatodiphenylmethan | b | 3,45 | 3,69 | | 3,80 | 3,72 |
| 1,6-Hexamethylendiisocyanat | b | | | 2,66 | | |
| Stearylamid | c | 0,59 | 0,69 | 1,00 | 0,97 | 0,50 |
| Carbodiimid (bsp. 1A) | c | | 0,63 | 0,53 | 0,52 | 0,50 |
| 2,6-Di-t-butyl-4-methylphenol | c | 0,12 | 0,13 | 0,13 | 0,13 | 0,13 |
| Naphthylen-1,5-diisocyanat | d | 22,24 | 23,48 | 18,09 | 23,60 | 22,04 |
| Ethandiol | e | - | - | - | - | - |
| Butandiol-1.4 | e | 5,27(68) | 5,64(68) | - | 5,80(92,2) | - |
| Hexandiol-1.6 | e | 1,76(17) | 1,88(17) | - | 0,64(7,8) | 8,82(87,4) |
| Hydrochinon-di-β-hydroxyethylether | e | - | - | 9,97(77,2) | - | - |
| Trimethylolpropan | e | 1,17(15) | 1,25(15) | 1,33(28,8) | - | 1,26(12,6) |
| NCO/OH | e | 1,05 | 1,05 | 1,03 | 1,03 | 1,03 |

**Tabelle 3** (Fortsetzung)

| | Kompo-nente | Beispiel-Nummer (Angaben in Gew.-Teilen) | | | |
| --- | --- | --- | --- | --- | --- |
| | | 1.N. | 1.O. | 1.P. | 1.Q. |
| | | | (Vergleichsversuche) | | (erfindungsgemäß) |
| Butandiol-1.4-adipat (OHZ 59) | a | | | | 65,51 |
| Hexandiol-1.6-adipat (OHZ 55) | a | 34,53 | 66,00 | | |
| Butandiol-1.4, Hexandiol-1.6-adipat (OHZ 59) | a | | | 52,94 | |
| Hexandiol-1.6-Polycarbonat (OHZ 56) | a | | | | |
| Polyester aus Adipinsäure, Diethylenglykol und Trimethylolpropan (OHZ 62) | a | 34,53 | | | |
| 4,4'-Diisocyanatodiphenylmethan | b | | | 36,10 | 3,86 |
| 1,6-Hexamethylendiisocyanat | b | | | | |
| Stearylamid | c | 1,04 | 0,93 | 0,32 | 0,33 |
| Carbodiimid (bsp. 1A) | c | 0,35 | 0,53 | 0,53 | 0,65 |
| 2,6-Di-t-butyl-4-methylphenol | c | 0,14 | 0,13 | 0,05 | 0,13 |
| Naphthylen-1,5-diisocyanat | d | 18,99 | 21,01 | - | 21,41 |
| Ethandiol | e | - | - | - | - |
| Butandiol-1.4 | e | - | - | 9,53 | 5,89 |
| Hexandiol-1.6 | e | - | - | - | 1,96 |
| Hydrochinon-di-$\beta$-hydroxyethylether | e | 10,36(100) | 9,90(77,2) | - | - |
| Trimethylolpropan | e | - | 1,32(22,8) | - | 0,26 Zuckerpolyol-OHZ 380 |
| NCO/OH | e | 1,03 | 1,03 | - | 1,03 Funktionalität 58 |

( ) Angaben in Klammern bedeuten Äquivalentprozente OH-Gruppen im Kettenverlängerungsgemisch.

**Tabelle 4** Eigenschaften der thermoplastisch verarbeiteten Polyurethanelastomeren entsprechend Beispiel 1C) bis 1K) bzw. entsprechend der Vergleichsversuche 1L) bis 1.O) (Zusammensetzung entsprechend den Angaben von Tabelle 3)

| Prüfung | Maß-einhet | DIN-Norm | Wert | | | | | | | | | | | |
| --- | --- | --- | --- | --- | --- | --- | --- | --- | --- | --- | --- | --- | --- | --- |
| | | | 1.C. | 1.D. | 1.E. | 1.F. | 1.G. | 1.H. | 1.J. | 1.K. | 1.L. | 1.M. | 1.N. | 1.O. |
| Modul 100 % | MPa | 53 504 | 15,0 | 14,6 | 12,3 | 13,2 | 13,3 | 17,0 | 14,2 | 12,6 | nicht thermoplastisch zu Elastomeren mit guten Eigenschaften (meßbare Probekörper) verarbeitbar | | | |
| Modul 300 % | MPa | 53 504 | 25,6 | 30,6 | 20,2 | 26,2 | 23,3 | 38,9 | 30,5 | 20,9 | | | | |
| Zugfestig-keit | MPa | 53 504 | 29,4 | 53,7 | 45,5 | 66,3 | 39,6 | 68,0 | 62,7 | 38,5 | | | | |
| Bruch-dehnung | % | 53 504 | 376 | 395 | 602 | 547 | 460 | 426 | 419 | 466 | | | | |
| Weiter-reißwider-stand | kN/m | 53 515 | - | 73,5 | 73,3 | 92,2 | 70,0 | 92,6 | 67,6 | 72,2 | | | | |
| Shore-Härte A/D | | 53 505 | 90/- | 95/43 | 92/40 | 92/42 | 90/- | 94/47 | 93/44 | 91/- | | | | |
| Elastizität | % | 53 512 | 41 | 35 | 39 | 39 | 35 | 33 | 36 | 35 | | | | |
| Restdruck-verformung 24 h/100°C | % | 53 517 | 48 | 46 | 42,9 | 30,5 | 42,8 | 36,5 | 37,8 | 48,1 | | | | |
| Abrieb | mm³ | 53 516 | - | 27 | 26 | 26 | 19 | 28 | 22 | 29 | | | | |

**II. Herstellung der erfindungsgemäßen, thermoplastischen PU-Elastomeren auf einer Zweiwellenknetmaschine**

Die Arbeitsweise einer Zweiwellenknetmaschine (z. B. ZSK-53 der Firma Werner und Pfleiderer, Stuttgart) wird in den DE-Patentschriften 813 154, 862 668 und 940 109, der DE-A-2 302 564, sowie den US-Patenten 3 233 025 und 3 642 964 beschrieben.

Die Verweilzeiten der Reaktionsschmelze in der Schneckenmaschine betragen in der Regel 0,3 - 30, bevorzugt 0,5 bis 4 Minuten. Die Temperatur des Schneckengehäuses liegt zwischen etwa 60 und 300°C (ca. 80 bis 280°C in der Eingangszone; ca. 100 bis 300°C in der Mitte des Extruders und ca. 120 bis 250°C in der Austragszone). Die aus dem Extruder austretende Schmelze wird nach an sich bekannten Verfahren abgeschreckt und zerkleinert. Die Verfahrensprodukte können auf die übliche Weise thermoplastisch zu Formkörpern, wie Zahnrädern, Dichtungen etc. verarbeitet werden.

Das folgende Beispiel erläutert die Erfindung. In dem Beispiel wird eine Zweiwellenschneckenknetpresse des Typs ZSK 53 V der Fa. Werner & Pfleiderer, Stuttgart, mit selbstreinigenden Wellenbesatz verwendet. Die Länge des Verfahrensteils entspricht dem etwa 20-fachen Wellendurchmesser.

Für das Beispiel wird ein Wellenbesatz mit einem Knetelementanteil von ca. 20 % verwendet. Der Verfahrensteil besteht aus 12 Gehäusen. Funktion und Wirkungsweise der Schneckenmaschine, von Knet- und Förderelementen des Wellenbesatzes usw. sind in den Firmenschriften Werner & Pfleiderer bzw. in der DE-B-2 302 564 ausführlich beschrieben.

Die Herstellung des thermoplastischen Polyurethans erfolgt mit folgenden Ausgangsstoffen in den angegebenen Gewichtsteilen:

a) 63,08 Gew.-Teile Butandiol-1.4/Hexandiol-1.6-Adipinsäurepolyester (OH-Zahl 59) aus Beispiel 1A).

b) 3,72 Gew.-Teile 4,4'-Diisocyanato-diphenylmethan

c) 0,44 Gew.-% Stearylamid·

d) 0,50 Gew.-Teile 2,2'-6,6';Tetraisopropyl-diphenyl-carbodiimid
0,13 Gew.-Teile 2,6-Di-tert.-butyl-4-methyl-Phenol

e) 23,33 Gew.-Teile Naphthylen-1.5-diisocyanat

f) Kettenverlängerergemisch aus
5,67 Gew.-Teilen Butandiol-1.4 (67,7 Äquivalent-% OH-Gruppen)
1,89 Gew.-Teilen Hexandiol-1.6 (17,2 Äquivalent-% OH-Gruppen)
1,26 Gew.-Teilen Trimethylolpropan (15,1 Äquivalent-% OH-Gruppen).

Das Gesamt-NCO/OH-Verhältnis beträgt 1,03 : 1.

Die Komponenten a) und b) werden 25 zu 75 aufgeteilt und in getrennten Vorlagekesseln bei 130°C umgesetzt. Nach ca. 30 Minuten werden in den Kessel mit 3/4 des OH-Prepolymers die Komponenten d) eingerührt. Die Komponente e) wird in Pulverform zu den 1/4 des OH-Prepolymers gegeben und unter Rühren eine Stunde bei 130° umgesetzt. Die Komponente f) befindet sich in einem weiteren Vorlagekessel bei Raumtemperatur. Beide Prepolymeransätze werden über Zahnradpumpen in das Gehäuse 2 der Zweischneckenknetmaschine eindosiert. Die Komponente b) wird über eine kleine Kolbenpumpe in den mit Stickstoff überlagerten Trichter am Anfang der Schneckenmaschine eingespeist. Die Kettenverlängerergemisch-Komponente f) wird über eine Kolbenpumpe in Gehäuse 4 gegeben.

An der Schneckenmaschine werden folgende Gehäusetemperaturen eingestellt:

| Gehäuse | 1 | 3 | 5 | 7 | 9 | 11 | 12 | Kopf |
|---------|-----|-----|-----|-----|-----|-----|-----|-------|
| Temperatur | 100 | 260 | 250 | 230 | 210 | 150 | 120 | 200°C |

Das erhaltene thermoplastische Polyurethan weist nach dreitägiger Lagerung, Verspritzen auf üblichen Spritzgußmaschinen und Temperung der Probekörper (15 Stunden bei 110°C) die in Tabelle 5 beschriebenen Eigenschaften auf.

**Tabelle 5** Eigenschaften der PU-Elastomer-Probekörper

| Prüfung | Maßeinheit | DIN-Norm | Wert |
|---------|-----------|----------|------|
| Modul 100 % | MPa | 53 504 | 11,2 |
| Modul 300 % | MPa | 53 504 | 22,4 |
| Zugfestigkeit | MPa | 53 504 | 30,6 |
| Bruchdehnung | % | 53 504 | 375 |
| Weiterreißwiderstand | kN/m | 53 515 | 68,2 |
| Shore-Härte A/D | | 53 505 | 93/43 |
| Elastizität | % | 53 512 | 41 |
| Restdruckverformung 24 h bei 100°C | % | 53 517 | 49,0 |
| Abrieb | mm³ | 53 516 | 19 |

Verwendet man entsprechend diesem Beispiel als Kettenverlängerer Gemische f) aromatische Diole, so muß die Einlauftemperatur für die Mischung f) über dem Schmelzpunkt des aromatischen Diols liegen.

**Patentansprüche**

1. Verfahren zur Herstellung thermoplastisch verarbeitbarer Polyurethanelastomerer auf Basis von Naphthylen-1,5-diisocyanat mit hoher Rückverformung und hohen elastischen Werten auch bei hohen Temperaturen, durch mehrstufige Umsetzung von im wesentlichen linearen, höhermolekularen Polyhydroxylverbindungen mit Molekulargewichten zwischen 550 und 10.000, unterschüssigen Mengen an Diisocyanaten und weitere Umsetzung mit andersartig aufgebauten Diisocyanaten und niedermolekularen Di- und Tri- und/oder Polyolen, gegebenenfalls unter Mitverwendung üblicher Antioxidantien, UV-Absorber, Lichtschutzmittel, Hydrolysenschutzmittel, Trennwachse, üblicher sonstiger Stabilisatoren, Hilfsmittel, Füll- und Farbstoffe, indem man

A) die höhermolekularen, im wesentlichen linearen Polyhydroxylverbindungen mit einem von Naphthylen-1,5-diisocyanat verschiedenen Diisocyanat, zu einem OH-Prepolymer, bevorzugt in einem OH/NCO-Äquivalentverhältnis von 4 : 1 bis 1,33 : 1, vorverlängert,

B) das in Stufe A) hergestellte OH-Prepolymer mit Naphthylen-1,5-diisocyanat zu einem NCO-Prepolymer umsetzt und anschließend mit

C) einem Hydroxylgruppen enthaltenden Kettenverlängerer C) mit einem Molekulargewicht von 62 bis 500 zum Polyurethan umsetzt, dadurch gekennzeichnet, daß im Kettenverlängerer C)

a) 70 bis 92 Äquivalent-% der OH-Gruppen aus Diolen stammen und diese Diole Hydrochinon-di($\beta$)-hydroxyethylether, Butandiol-1,4 oder Hexandiol-1,6 als Hauptkomponente enthalten,

b) bei Verwendung von Butandiol-1,4 oder Hexandiol-1,6 als Hauptkomponente nur Diolgemische verwendet werden, welche 15 bis 50 Äquivalent-%, bezogen auf Diol-OH-Äquivalent-%, wenigstens eines von der Hauptkomponente unterschiedenen Dioles mit einem Molekulargewicht von 62 bis 254 enthalten und

c) 30 bis 8 Äquivalent-% der OH-Gruppen aus tri- und/oder höherfunktionellen Polyolen stammen.

2. Verfahren zur Herstellung von thermoplastisch verarbeitbaren Polyurethanelastomeren nach Anspruch 1, dadurch gekennzeichnet, daß man bei Stufe A) die höhermolekularen Polyhydroxylverbindungen mit Diphenylmethan-4,4'-diisocyanat in einem OH/NCO-Verhältnis von 3 : 1 bis 1,5 : 1 umsetzt.

3. Verfahren zur Herstellung von thermoplastisch verarbeitbaren Polyurethanelastomeren nach Ansprüchen 1 und 2, dadurch gekennzeichnet, daß man das OH-Prepolymer mit soviel Naphthylen-1,5-diisocyanat umsetzt, wie für den Erhalt eines NCO-Prepolymeren mit 4 bis 12 Gew.-% NCO erforderlich ist.

4. Verfahren zur Herstellung von thermoplastisch verarbeitbaren Polyurethanelastomeren nach Ansprüchen 1 bis 3, dadurch gekennzeichnet, daß 30 bis 8 Äquivalent-% der Hydroxylgruppen des Diol/Polyol-Kettenverlängerers C) aus Triolen stammt und man als Diol den Hydrochinon-di($\beta$-hydroxyethyl)-ether oder Gemische aus Butandiol-1,4 oder Hexandiol-1,6 und mindestens 15 Äquivalent-% OH und höchstens der Hälfte der Diol-OH-Äquivalent-% an weiteren geradkettigen oder verzweigten, aliphatischen Diolen einsetzt.

5. Verfahren nach Ansprüchen 1 bis 4, dadurch gekennzeichnet, daß das Diolgemisch aus Butandiol-1,4 oder Hexandiol-1,6 und in seiner Co-Diolkomponente aus Ethandiol, Hexandiol-1,6, Butandiol-1,4, Diethylenglykol oder Neopentylglykol besteht.

6. Verfahren nach Ansprüchen 1 bis 5, dadurch gekennzeichnet, daß das Kettenverlängerergemisch C) in seinem Diol-Anteil zu 75 bis 90 Äquivalent-% OH aus einem Gemisch von Butandiol-1,4 und Hexandiol-1,6 und zu 25 bis 10 Äquivalent-% aus Triolen besteht.

7. Verfahren nach Ansprüchen 1 bis 6, dadurch gekennzeichnet, daß der Kettenverlängerer C) aus einem Gemisch von 75 bis 90 Äquivalent-% OH Hydrochinondi-($\beta$-hydroxyethyl)-ether und 25 bis 10 Äquivalent-% OH Triolen besteht.

8. Verfahren nach Ansprüchen 1 bis 7, dadurch gekennzeichnet, daß als Triol Trimethylolpropan eingesetzt wird.

9. Verfahren zur Herstellung von Formkörpern durch thermoplastische Verarbeitung von Polyurethanen, dadurch gekennzeichnet, daß ein Polyurethan verwendet wird, welches gemäß wenigstens einem der vorhergehenden Ansprüche hergestellt wurde.

10. Nach dem Verfahren gemäß Ansprüchen 1 bis 8 erhältliche thermoplastische Polyurethane.

**Revendications**

1. Procédé de préparation d'élastomères de polyuréthannes aptes au travail thermoplastique, à base de naphtylène-1,5-diisocyanate ayant une haute capacité de reprise après déformation et de hautes valeurs élastiques même à température élevée, par réaction en plusieurs stades opératoires de composés polyhydroxylés à haut poids moléculaire, essentiellement linéaires, à des poids moléculaires de 550 à 10 000, de défauts de diisocyanates, et réaction subséquente avec des diisocyanates à structure différente et des di- et tri- et/ou polyols à bas poids moléculaire, éventuellement avec utilisation conjointe d'antioxydants, absorbeurs de lumière ultraviolette, agents de protection contre la lumière, agents de protection contre l'hydrolyse, cires de démoulage de types courants, d'autres stabilisants, produits auxiliaires, matières de charge et colorants usuels, dans lequel

A) on soumet les composés polyhydroxylés à haut poids moléculaire, essentiellement linéaires, à allongement préalable sous l'action d'un diisocyanate autre que le naphtylène-1,5-diisocyanate, avec formation d'un prépolymère à groupes OH, de préférence à un rapport des équivalents OH/NCO de 4: 1 à 1,33 : 1,

B) on fait réagir le prépolymère à groupes OH préparè au stade opératoire A) avec le naphtylène-1,5-diisocyanate, avec formation d'un prépolymère à groupes NCO puis

C) on fait réagir avec un agent d'allongement des chaînes C), contenant des groupes hydroxy, de poids moléculaire 62 à 500, avec formation du polyuréthanne, caractérisé en ce que, dans l'agent d'allongement des chaînes C)

a) 70 à 92 équivalents % des groupes OH proviennent de diols et ces diols contiennent en tant que composant principal l'éther di-(β-hydroxyéthylique) de l'hydroquinone, le 1,4-butane-diol ou le 1,6-hexane-diol,

b) lorsqu'on utilise en tant que composant principal le 1,4-butanediol ou le 1,6-hexane-diol, on n'utilise que des mélanges de diols contenant 15 à 50 équivalents %, par rapport aux équivalents % de groupes OH de diols, d'au moins un diol autre que le composant principal, de poids moléculaire 62 à 254, et

c) 30 à 8 équivalents % des groupes OH proviennent de polyols trifonctionnels et/ou à fonctionnalité supérieure.

2. Procédé de préparation d'élastomères de polyuréthannes aptes au travail thermoplastique selon la revendication 1, caractérisé en ce que, au stade opératoire A), on fait réagir les composés polyhydroxylés à haut poids moléculaire avec le diphényl-méthane-4,4'-diisocyanate, à un rapport OH/NCO de 3 : 1 à 1,5 : 1.

3. Procédé de préparation d'élastomères de polyuréthannes aptes au travail thermoplastique selon les revendications 1 et 2, caractérisé en ce que l'on fait réagir le prépolymère à groupes OH avec le naphtylène-1,5-diisocyanate en quantité nécessaire pour obtenir un prépolymère à groupes NCO contenant de 4 à 12 % en poids de groupes NCO.

4. Procédé de préparation d'élastomères de polyuréthannes aptes au travail thermoplastique selon les revendications 1 à 3, caractérisé en ce que 30 à 8 équivalents % des groupes hydroxy de l'agent d'allongement des chaînes C) à base de diols/polyols proviennent de triols et en ce que l'on utilise en tant que diol l'éther di-(β-hydroxyéthylique) de l'hydroquinone ou des mélanges du 1,4-butane-diol ou du 1,6-hexane-diol et d'au moins 15 équivalents % de groupes OH et au maximum la moitié des équivalents % de groupes OH de diols d'autres diols aliphatiques à chaîne droite ou ramifiée.

5. Procédé selon les revendications 1 à 4, caractérisé en ce que le mélange de diols consiste en 1,4-butane-diol ou 1,6-hexane-diol et en son composant co-diol, à savoir l'éthylène-glycol, le 1,6-hexane-diol, le 1,4-butane-diol, le diéthylène-glycol ou le glycol noépentylique.

6. Procédé selon les revendications 1 à 5, caractérisé en ce que le mélange d'agents d'allongement des chaînes C) consiste en sa partie diol, pour 75 à 90 équivalents % de groupes OH d'un mélange de 1,4-butane-diol et de 1,6-hexane-diol, et pour 25 à 10 équivalents % de triols.

7. Procédé selon les revendications 1 à 6, caractérisé en ce que l'agent d'allongement des chaînes C) consiste en un mélange de 75 à 90 équivalents % de groupes OH de l'éther di-(β-hydroxyéthylique) de l'hydroquinone et pour 25 à 10 équivalents % de groupes OH de triols.

8. Procédé selon les revendications 1 à 7, caractérisé en ce que le triol utilisé est le triméthylolpropane.

9. Procédé pour fabriquer des objets moulés par travail thermoplastique de polyuréthannes, caractérisé en ce que l'on utilise un polyuréthanne qui a été préparé selon au moins une des revendications qui précèdent.

10. Les polyuréthannes thermoplastiques obtenus par le procédé selon les revendications 1 à 8.

## Claims

1. A process for the production of thermoplastic polyurethane elastomers based on naphthylene-1,5-diisocyanate having high recovery and high elastic values even at high temperatures, by multistep reaction of substantially linear, relatively high molecular weight polyhydroxyl compounds having molecular weights of from 550 to 10,000, substoichiometric quantities of diisocyanates and subsequent reaction with diisocyanates of different structure and low molecular weight di- and tri- and/or polyols, optionally in the presence of typical antioxidants, UV absorbers, light stabilizers, hydrolysis stabilizers, release waxes, other typical stabilizers, auxiliaries, fillers and dyes, by

A) pre-extending the relatively high molecular weight, substantially linear polyhydroxyl compounds with a diisocyanate different from naphthylene-1,5-diisocyanate to form an OH prepolymer, preferably in an OH/NCO equivalent ratio of from 4 : 1 to 1.33 : 1,

B) reacting the OH prepolymer prepared in step A) with naphthylene-1,5-diisocyanate to form an NCO prepolymer and reacting the NCO prepolymer thus formed with

EP 0 135 111 B1

C) a chain extending agent C) containing hydroxyl groups and having a molecular weight of from 62 to 500 to form the polyurethane,
characterized in that
a) 70 to 92 equivalent-% of the OH groups emanate from diols and these diols contain hydroquinone di-(β-hydroxyethyl)-ether, butane-1,4-diol or hexane-1,6-diol as principal component,
b) where butane-1,4-diol or hexane-1,6-diol is used as the principal component, only diol mixtures containing 15 to 50 equivalent-%, based on diol-OH-equivalent-%, of at least one diol different from the principal component and having a molecular weight of from 62 to 254 are used and
c) 30 to 8 equivalent-% of the OH groups emanate from trifunctional and/or higher polyols.

2. A process for the production of thermoplastic polyurethane elastomers as claimed in claim 1, characterized in that, in step A), the relatively high molecular weight polyhydroxyl compounds are reacted with diphenylmethane-4,4'-diisocyanate in an OH/NCO ratio of from 3 : 1 to 1.5 : 1.

3. A process for the production of thermoplastic polyurethane elastomers as claimed in claims 1 and 2, characterized in that the OH prepolymer is reacted with the quantity of naphthylene-1,5-diisocyanate required to obtain an NCO prepolymer containing 4 to 12 % by weight NCO.

4. A process for the production of thermoplastic polyurethane elastomers as claimed in claims 1 to 3, characterized in that 30 to 8 equivalent-% of the hydroxyl groups of the diol/polyol chain extender C) emanate from triols and the diol used is hydroquinone di-(β-hydroxyethyl)-ether or a mixture of butane-1,4-diol or hexane-1,6-diol and at least 15 equivalent-% and at most half the diol-OH-equivalent-% of another straight-chain or branched aliphatic diol.

5. A process as claimed in claims 1 to 4, characterized in that the diol mixture consists of butane-1,4-diol or hexane-1,6-diol and, in its co-diol component, of ehtanediol, hexane-1,6-diol, butane-1,4-diol, diethylene glycol or neopentyl glycol.

6. A process as claimed in claims 1 to 5, characterized in that 75 to 90 equivalent-% OH of the diol component of the chain extender mixture C) consists of a mixture of butane-1,4-diol and hexane-1,6-diol and 25 to 10 equivalent-% of triols.

7. A process as claimed in claims 1 to 6, characterized in that the chain extender C) consists of a mixture of 75 to 90 equivalent-% OH hydroquinone di-(β-hydroxyethyl)-ether and 25 to 10 equivalent-% OH triols.

8. A process as claimed in claims 1 to 7, characterized in that trimethylol propane is used as the triol.

9. A process for the production of mouldings by processing of thermoplastic polyurethane, characterized in that a polyurethane produced in accordance with at least one of the preceding claims is used.

10. Thermoplastic polyurethanes obtained by the process claimed in claims 1 to 8.

13

FIG. 1

EP 0 135 111 B1

FIG. 2

Schubmodul G'

ε

Dämpfung tan δ

$10^3$ $10^0$

$10^2$ $10^{-1}$

$10^1$ 10

$10^0$ 1

-60 -40 -20 0 20 40 60 80 100 120 140 160 180 200 220 °C

EP 0 135 111 B1

FIG. 3